# EUROPEAN PATENT APPLICATION

(11) **EP 3 683 962 A1**
(43) Date of publication of application: **22.07.2020**
(21) Application number: 19214028.3
(22) Date of filing: 29.06.2016
(51) Int. Cl.: H02S 50/00, E21B 43/24, H02S 40/44, H02S 40/42, F24S 30/00, F24S 40/55, F24S 30/40

(54) **SUPPORTS FOR SUSPENDED SOLAR ENHANCED OIL RECOVERY CONCENTRATORS AND RECEIVERS, AND ASSOCIATED SYSTEMS AND METHODS**

(30) Priority: 30.06.2015 US 201562187171 P
(62) Divisional of application: 16818703.7
(71) Applicant: Glasspoint Solar, Inc., Fremont, CA 94538 (US)
(72) Inventor: Farver, Adam, CA, 94555 (US); Von Behrens, Peter Emery, CA, 94025 (US); Fairbanks, Dylan Miller, CA, 94501 (US); Chandra, Manish, CA, 94555 (US); Burvill, Hayden Graham, CA, 94070 (US)
(74) Representative: Cornford, James Robert

(57) **Abstract**

Supports for suspended solar enhanced oil recovery concentrators and receivers, and associated systems and methods. A representative solar concentrator system includes a curved reflective element oriented concave relative to a focal line, a curved first rib member carrying the reflective element and oriented concave relative to the focal line, a curved second rib member oriented convex relative to the focal line, and a plurality of cross members coupled between the first rib member and the second rib member. In further embodiments, the system includes a bearing having an inner bearing element in rotational contact with a concentrator attachment member, which supports a solar concentrator. A receiver interface member is fixedly engaged with the inner bearing element, and a receiver attachment member is pivotably connected to the receiver interface member. A biasing element biases the inner bearing element against the receiver.

## Description

### TECHNICAL FIELD

The present application claims priority to pending U.S. provisional application No. 62/187,171, filed June 30, 2015, which is incorporated herein by reference in its entirety. To the extent the foregoing application and/or any other materials incorporated herein by reference conflict with the present application, the present application controls.

The present technology is directed generally to supports for suspended solar concentrators and receivers, and associated systems and methods. In particular embodiments, the solar concentrators and receivers are used to heat water for thermal-enhanced oil recovery.

### BACKGROUND

As fossil fuels become more scarce, the energy industry has developed more sophisticated techniques for extracting fuels that were previously too difficult or expensive to extract. One such technique is to inject steam into an oil-bearing formation to free up and reduce the viscosity of the oil. Several techniques for steam injection presently exist, and are often referred to collectively as "Thermal Enhanced Oil Recovery," or "Thermal EOR." Representative steam injection techniques include cyclic, steamflood, steam-assisted gravity drainage (SAGD), and other strategies using vertical and/or horizontal injection wells, or a combination of such wells, along with continuous, variable-rate, and/or intermittent steam injection in each well.

One representative system for generating steam for steam injection is a fuel-fired boiler, having a once-through configuration or a recirculating configuration. Other steam generating systems include heat recovery steam generators, operating in a continuous mode. Thermal EOR operations often produce steam 24 hours per day, over a period ranging from many days to many years, which consumes a significant amount of fuel. Accordingly, another representative steam generator is a solar steam generator, which can augment or replace fuel-fired boilers. Solar steam generators can reduce fuel use, reduce operations costs, reduce air emissions, and/or increase oil production in thermal recovery projects.

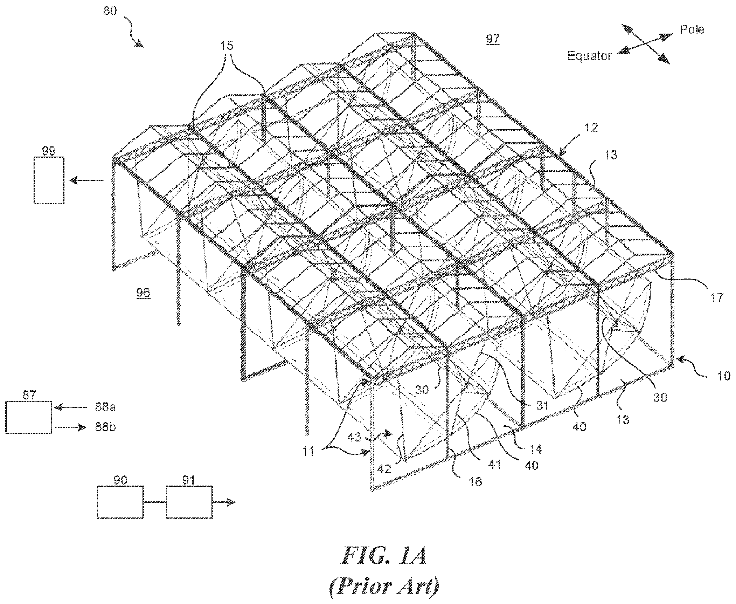

Figure 1A is a partially schematic, top isometric illustration of a solar energy system 80 configured in accordance with the prior art. The solar energy system 80 is configured to collect the energy from incoming solar radiation and use the energy for solar EOR. The solar energy system 80 includes multiple solar concentrators 40 that concentrate incoming solar radiation onto corresponding receivers 30. Accordingly, the solar concentrators 40 have highly reflective (e.g., mirrored) surfaces that redirect and focus incoming solar radiation onto the receivers 30. The receivers 30 can take the form of elongated conduits or pipes. The receivers 30 receive water (e.g., from a water source 90) which is pressurized and directed to the receivers by a pump 91. The water passing through the receivers 30 is heated to steam by the concentrated solar radiation provided by the concentrators 40. The steam is then directed to a target 99 where it can be used for enhanced oil recovery and/or other processes.

With continued reference to Figure 1A, the concentrators 40 and receivers 30 can be housed in an enclosure 10. The enclosure 10 can include walls 14 (some of which are not shown for purposes of illustration) and a roof 12 that provide a boundary between a protected interior region 96 and an exterior region 97. In particular, the enclosure 10 can protect the concentrators 40 from wind, dust, dirt, contaminants, and/or other potentially damaging or obscuring environmental elements that may be present in the exterior region 97. At the same time, the enclosure 10 can include transmissive surfaces 13, e.g., at the walls 14 and/or the roof 12 of the enclosure 10 to allow solar radiation to pass into the interior region 96 and to the concentrators 40. For example, in a particular embodiment, the vast majority of the surface area of the enclosure 10, including the walls 14 and the roof 12, is made of glass or another suitable transmissive and/or transparent material.

In a particular embodiment, the enclosure 10 has supports 11, including upright supports 16 that provide support for the walls 14 and for overhead supports 17. The overhead supports 17 in turn provide support for the roof 12. Gutters 15 drain water from sections of the roof 12 and can provide support for the concentrators 40 and receivers 30. In particular, the receivers 30 can be suspended from the gutters 15 by receiver suspension lines 31, and the concentrators 40 can be suspended from the receivers 30 by concentrator suspension lines 41.

The receivers 30 and concentrators 40 can be arranged in rows, as shown in Figure 1A. The receivers 30 in adjacent rows can be connected to each other via U-shaped pipes (not shown in Figure 1A) at the ends of each row. The flow of water through the receivers 30 can accordingly follow a serpentine path. In addition, the receivers 30 are typically fixed at one end. Accordingly, the opposite ends of the receivers 30 can elongate and shrink by significant amounts as the receivers 30 heat and cool. In a particular embodiment, the rows are arranged in a generally east-west configuration so that the concentrators 40 generally face toward the equator. Because the sun's orientation changes from season to season and during the course of the day, the solar energy system 80 can include a drive mechanism 43 that moves the solar concentrators 40 relative to the receivers 30 as the sun's angle of inclination changes. For example, the drive mechanism 43 can include a motor-driven winch coupled to a driveline 42 so as to rotate each concentrator 40 relative to its corresponding receiver 30. For systems having the concentrators 40 arranged in an east-west orientation as shown in Figure 1A, the rotation rate and daily rotation angle can be moderate. For other systems, in which the concentrators 40 are arranged along a longitudinal equator-pole axis (e.g., north-south), the concentrators 40 rotate through a significant angle, e.g., 180°, on a daily basis to track the daily relative motion of the sun, and accordingly the rotation rates tend to be higher. A controller 87 receives inputs 88a (e.g., sensor inputs) and transmits outputs 88b (e.g., directives for moving the concentrators 40).

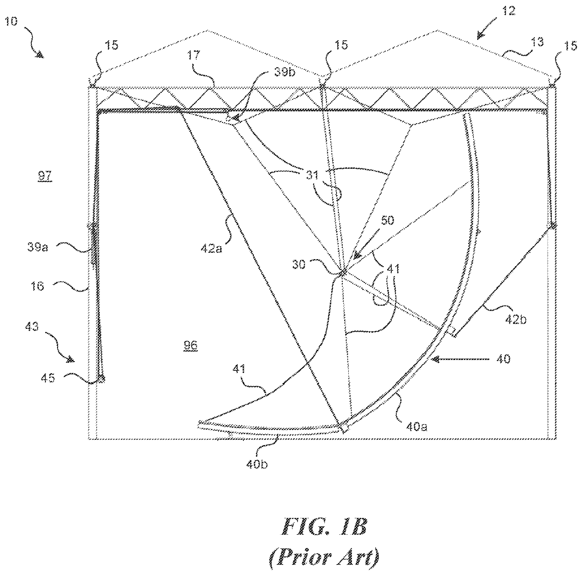

Figure 1B is a partially schematic end view of a portion of the enclosure 10, together with a concentrator 40 and a corresponding receiver 30. The concentrator 40 can include a first portion 40a and a second portion 40b. In a particular embodiment, the first portion 40a is bilaterally symmetric, and the second portion 40b provides a unilateral extension for additional solar radiation collection at particular incidence angles. As shown in Figure 1B, the second portion or extension 40b can be moveable (e.g., pivotable) relative to the first portion 40a.

The illustrated concentrator 40 is suspended from the receiver 30 via the concentrator suspension lines 41, and the receiver 30 is suspended from the gutters 15 via corresponding receiver suspension lines 31. The concentrator 40 can be rotated relative to the receiver 30 via the drive mechanism 43, which can include a double-acting winch 45. The winch 45 can be connected to the concentrator 40 with a first driveline 42a, which is connected to one location of the concentrator 40, and a second driveline 42b, which is connected to a different location of the concentrator 40 from the opposite direction. Pulleys are positioned to guide the drivelines 42a, 42b. Accordingly, the winch 45 can wind up one driveline while unwinding the other to rotate the concentrator 40. In general, only one driveline at a time will be in tension due to the weight of the concentrator 40. Corresponding slack weights 39a, 39b provide a moderate amount of tension on the driveline that is not bearing the weight (or a significant portion of the weight) of the concentrator 40. The relative masses of the slack weights 39a, 39b can be adjusted to adjust the neutral position of the concentrator 40. A bearing 50 facilitates the rotation of the concentrator 40 while the receiver 30 is fixed.

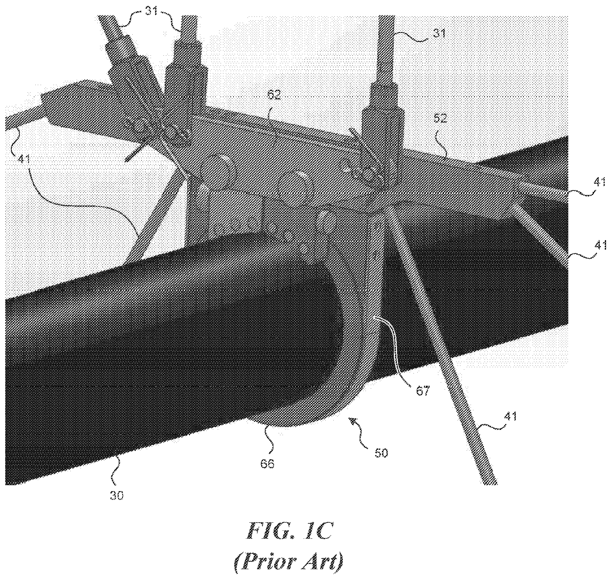

Figure 1C illustrates a bearing 50 configured in accordance with the prior art. The bearing 50 includes an inner bearing element 66 attached to the receiver 30 and a receiver support 62, and an outer bearing element 67 that is rotatably engaged with the inner bearing element 66, and is attached to a concentrator support 52. The concentrator support 52 is attached to the concentrator suspension lines 41, which are in turn attached to the concentrator 40 (Figure 1B). The receiver support 62 is attached to corresponding receiver suspension lines 31, which are in turn attached to the gutters 15 of the surrounding enclosure 10 (Figure 1B).

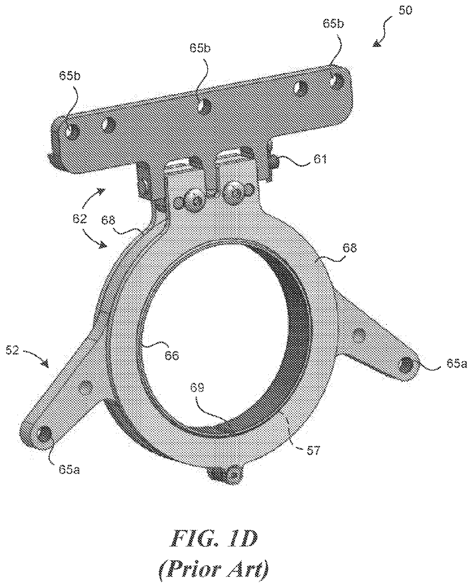

Figure 1D illustrates another arrangement for a bearing 50 in which the receiver support 62 includes two components connected by a pivot pin 61. Accordingly, the pivot pin 61 facilitates some axial motion of the receiver 30 (Figure 1C) as the receiver expands and contracts under changing thermal loads. The bearing 50 further includes an inner bearing element 66 attached to the receiver 30. The inner bearing element 66 includes a slit or slot 69 that allows the inner bearing element 66 to be spread apart for movement along the receiver 30 to its installed location. The concentrator support 52 supports an outer bearing element (not visible in Figure 1D) that is rotatably engaged with the outwardly facing surface 57 of the inner bearing element 66. Opposing face plates 68 restrict the axial motion of the concentrator support 52. The concentrator support 52 includes support line holes 65a for connecting corresponding concentrator suspension lines to the concentrator, and the receiver support 62 includes support line holes 65b for attaching corresponding receiver suspension lines to the gutter of the enclosure, as discussed above.

While the foregoing arrangement described above with reference to Figures 1A-1D provides suitable thermal energy to end users, the inventors have identified several techniques that significantly improve the performance of the system, as discussed in further detail below.

### BRIEF DESCRIPTION OF THE DRAWINGS

Figure 1A is a partially schematic isometric illustration of a solar collector arrangement in accordance with the prior art.
Figure 1B is a partially schematic end view illustration of a portion of the solar collector arrangement shown in Figure 1A.
Figure 1C is a partially schematic illustration of a bearing configured in accordance with the prior art.
Figure 1D is a partially schematic illustration of another bearing configured in accordance with the prior art.
Figures 2A and 2B illustrate front and rear isometric views, respectively, of a portion of a bearing installed on a receiver in accordance with the present technology.
Figure 2C is an exploded isometric illustration of an embodiment of the bearing shown in Figures 2A and 2B.
Figure 3A schematically illustrates sun rays entering an enclosure, striking a concentrator, and reflecting to impinge on a receiver, in accordance with an embodiment of the present technology.
Figures 3B and 3C compare shading between a bearing in accordance with the prior art and a bearing in accordance with an embodiment of the present technology.
Figures 4A and 4B are side and isometric views, respectively, of a bearing configured in accordance with an embodiment of the present technology.
Figure 4C is an exploded illustration of an embodiment of the bearing shown in Figures 4A and 4B.
Figures 5A-5C are partially schematic end views of a bearing having inner bearing surfaces of different arc lengths, in accordance with embodiments of the present technology.
Figures 6A and 6B illustrate side and isometric views, respectively, of a bearing configured in accordance with an embodiment of the present technology.
Figures 7A and 7B illustrate uninstalled and installed views, respectively, of a bearing in accordance with an embodiment of the present technology.
Figure 8 illustrates a bearing having separate inner bearing surfaces in accordance with an embodiment of the present technology.
Figures 9A-9C illustrate bearings having configurations in accordance with further embodiments of the present technology.
Figures 10A-10F illustrate a process for installing bearings and shields on a receiver in accordance with an embodiment of the present technology.
Figure 11 illustrates a bearing installed in accordance with an embodiment of the present technology.
Figure 12 is a partially schematic end view of a system that includes a bearing and driveline arrangement configured in accordance with an embodiment of the present technology.
Figure 13 is a partially schematic end view of a concentrator having a supporting rib configured in accordance with an embodiment of the present technology.
Figures 14A and 14B illustrate concentrators having drivelines attached in accordance with embodiments of the present technology.
Figure 15 is a partially schematic illustration of a receiver fixed at a position away from both ends of the receiver, in accordance with an embodiment of the present technology.
Figures 16A and 16B are schematic illustrations of devices for cooling electronic components in accordance with still further embodiments of the present technology.
Figures 17A and 17B are partially schematic isometric and cross-sectional views, respectively, of a bearing configured in accordance with still another embodiment of the present technology.

### DETAILED DESCRIPTION

### 1.0 Overview

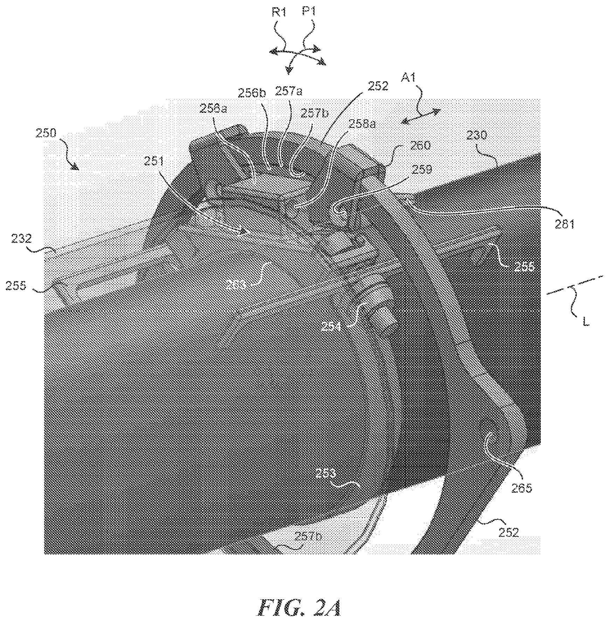

The present technology is directed generally to bearings and other equipment used to support solar concentrators relative to solar receivers, and associated systems and methods, including techniques for supporting and driving the solar concentrators. The solar concentrators can be used for generating steam for a variety of processes including power generation, heating, and/or solar enhanced oil recovery. Specific details of several embodiments of the disclosed technology are described below with reference to a system configured for oil well steam injection to provide a thorough understanding of these embodiments, but in other embodiments, representative systems can be used in other contexts. Several details describing structures or processes that are well-known and often associated with steam generation systems, but that may unnecessarily obscure some significant aspects of the present technology, are not set forth in the following description for purposes of clarity. Moreover, although the following disclosure sets forth several embodiments of different aspects of the presently disclosed technology, several other embodiments of the technology can have configurations and/or components different than those described in this section. Accordingly, the presently disclosed technology may have other embodiments with additional elements and/or without several of the elements described below with reference to Figures 2A-17B.

Aspects of the present technology improve upon the prior art in one or more of several areas. These areas include: reducing the weight of the solar concentrator, reducing loads on the solar concentrator, reducing or redistributing thermal expansion of the receiver, cooling system electronics, reducing the tendency for the bearing to transfer heat away from the receiver, reducing the extent to which the bearing shades or blocks sunlight from reaching the receiver, reducing potential damage to the receiver as the bearing is installed, and/or reducing the overall weight and cost of the bearing and associated components. Further improvements include allowing the concentrator to pivot as well as rotate relative to the receiver, thereby supporting the radial motion of the concentrator, and/or allowing for differential longitudinal expansion of the receiver and concentrator during normal use.

### 2.0 Representative Bearings and Associated Systems and Methods

In any of the embodiments described below, the disclosed bearings may be provided by a manufacturer in a disassembled or partially disassembled configuration, to facilitate installing the bearings in the manners described below.

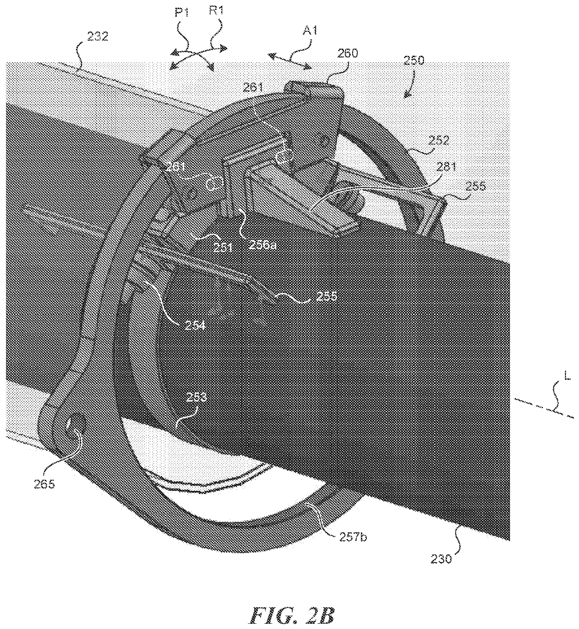

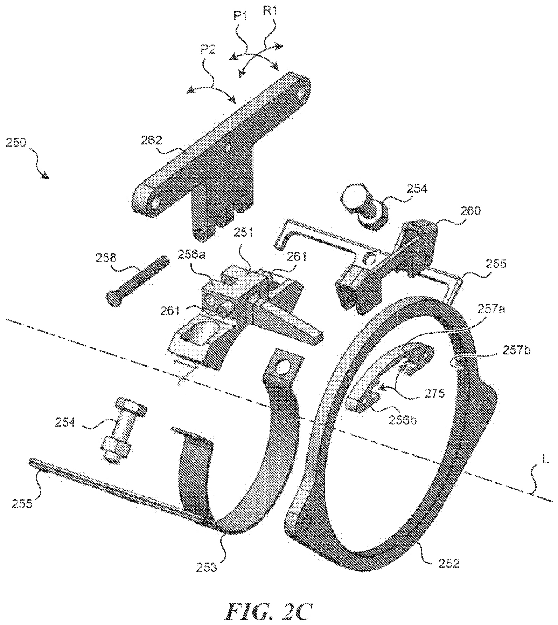

Figures 2A and 2B illustrate front isometric and rear isometric views, respectively, of a support bearing 250 installed on a receiver 230 in accordance with an embodiment of the present technology. In general terms, the bearing 250 includes (1) a receiver interface member 251 that is fastened to the receiver 230, (2) a concentrator attachment member 252 that moves relative to the receiver interface member 251 and supports a solar concentrator in position beneath the receiver 230, and (3) a receiver attachment member 262 (shown and described later with reference to Figure 2C) that also moves relative to the receiver interface member 251 and facilitates attachment of the receiver 230 in a suspended orientation. As will be described in further detail, the bearing 250 allows the concentrator to rotate about the major (e.g., longitudinal) axis L of the receiver 230. In addition, the arrangement allows both the concentrator attachment member 252 and the receiver attachment member 262 to pivot relative to the receiver interface member 251 about different axes. Accordingly, the bearing 250 can support additional movement of the foregoing components relative to each other, which can reduce wear and stress on the overall system.

In an embodiment shown in Figures 2A and 2B, the receiver interface member 251 has an engaging surface 263 in contact with the receiver 230, and is attached to the receiver via a band 253 that encircles or at least partially encircles the receiver 230. The receiver interface member 251 can include fasteners 254 that fasten the band 253 tightly around the receiver 230. The receiver interface member 251 can also include one or more shield supports 255 that support a transmissive shield 232 in a position offset from the surface of the receiver 230. For example, the transmissive shield 232 (only a portion of which is shown for purposes of illustration) can include a glass tube that rests on the shield supports 255 and prevents dust and/or other debris from settling on the surface of the receiver 230. This in turn protects the sensitive, radiation-absorbing coating of the receiver 230 from contamination by dust and debris, and can protect the coating from damage that may result from cleaning the receiver 230. Instead, dust and debris may settle on the transmissive shield 232 which is robust enough to withstand repeated cleanings without detrimental effects.

The receiver interface member 251 can also include a first element 256a that has a fixed position relative to the receiver 230, and that is pivotably connected to other elements of the bearing 250 so as to allow those elements to pivot relative to the receiver interface member 251 and therefore the receiver 230. For example, the first element 256a can include an aperture 258a that receives a receiver pin 258 (Figure 2C) to support a pivoting connection to the overhead structure. The bearing 250 can include a second element 256b (visible in Figure 2A) that is pivotably attached to the first element 256a so as to pivot in the direction indicated by arrows P1. As shown in Figure 2B, concentrator pin stubs 261 facilitate the pivoting motion. Referring again to Figure 2A, the second element 256b can also include an outwardly facing, curved first bearing surface 257a. The first bearing surface 257a engages in surface-to-surface contact with a second bearing surface 257b carried by the concentrator attachment member 252. The concentrator attachment member 252 rotates relative to the receiver 230 as indicated by R1, as the concentrator (to which the concentrator attachment member is connected) rotates when tracking the relative location of the sun. Accordingly, the bearing 250 facilitates (1) the rotational motion of the concentrator relative to the receiver 230 about the longitudinal axis L of the receiver 230, as well as (2) the pivoting motion of the concentrator relative to the receiver 230. The pivoting motion can in turn accommodate longitudinal offsets between the concentrator and the receiver that result from the different coefficients of thermal expansion of these components, and/or other forces that can produce relative motion between the receiver and the concentrator. A ramped cantilever member 281 (Figure 2B) extends from the receiver interface member 251 to bear against the receiver 230 and counter-act moments (due to the offset pivot axes) that might otherwise cause the bearing 250 to tip.

The first element 256a of the receiver interface member 251 can be connected to a retainer 260 that is positioned to at least restrain axial motion (indicated by arrow A1) of the concentrator attachment member 252. For example, the retainer 260 can be positioned around or at least partially around the concentrator attachment member 252, so as to allow the concentrator attachment member 252 to rotate as indicated by arrow R1 without causing the second bearing surface 257b to slide off the first bearing surface 257a in an axial direction. The retainer can be attached in position via mounting holes 259. The concentrator attachment member 252 includes multiple support member apertures 265 that receive concentrator support members (e.g., rods or lines) connected to the concentrator.

Figure 2C is an exploded illustration of an embodiment of the bearing 250 shown in Figures 2A-2B. The receiver interface element 251 has a concentrator pin 261 (or two oppositely-facing pin stubs) positioned to be pivotably received in pin apertures 275 of the second element 256b. Accordingly, the second element 256b can pivot relative to the first element 256a as indicated by arrow P1. The second element 256b includes the first bearing surface 257a that engages with the corresponding second bearing surface 257b carried by the concentrator attachment member 252. Accordingly, the concentrator attachment member 252 can rotate relative to the longitudinal axis as indicated by arrow R1. The retainer 260 is positioned around the upper portion of the concentrator attachment member 252 and is attached to the second element 256b to keep the concentrator attachment member 252 aligned and in contact with the second element 256b.

The receiver attachment member 262 pivotably attaches to the receiver interface member 251 via a receiver pin 258 so as to pivot in parallel with the concentrator attachment member 252, as indicated by arrow P2. The receiver interface member 251 is attached to the receiver (not shown in Figure 2C) with the band 253 and the band fasteners 254. The shield supports 255 provide support for the shield 232 (Figures 2A and 2B) positioned around the receiver.

In other embodiments, the bearing 250 can be formed from parts and/or combinations of parts other than those shown in Figure 2C. For example, the first element 256a and the second element 256b can be formed simultaneously in a 3-D printing operation that leaves a small annular space between the concentrator pin 261 (or pin stubs) and the walls of the apertures 275 in which the pin fits.

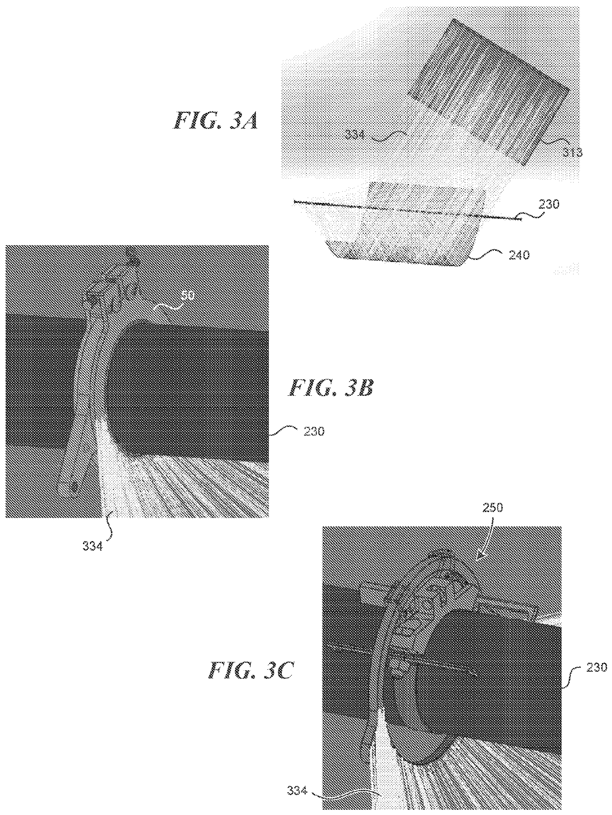

Figure 3A schematically illustrates a ray tracing of sunlight 334 passing through a transparent surface 313 of an enclosure to impinge on the concentrator 240 for reflection to the receiver 230. Figure 3B is a close-up illustration of rays 334 reflected from the concentrator 240 and striking a bearing 50 in accordance with the prior art, in particular, the bearing 50 discussed above with reference to Figure 1D. Figure 3C illustrates reflected rays 334 impinging on the bearing 250 described above with reference to Figures 2A-2C. An analysis and comparison of the ray traces shown in Figures 3B and 3C indicates that the design shown in Figure 3C blocks only half the rays blocked by the design shown in Figure 3B. An advantage of this result is that a greater amount of radiation is collected using the lower profile bearing described above with reference to Figures 2A-2C, as compared with the prior art design described above with reference to Figure 1D. In addition, the bearing 250 has less direct contact with receiver 230 than do the bearings 50 described above with reference to Figures 1C and 1D. An advantage of this feature is that it can reduce the amount of heat transferred away from the receiver 230 by the bearing 250, and therefore increase the thermal efficiency of the associated solar energy collection process. The lower mass also reduces the weight that must be carried by the receiver and the support structure from which it is suspended. This in turn reduces the structural loads on the overall system and therefore the cost of the system and likelihood for system failure.

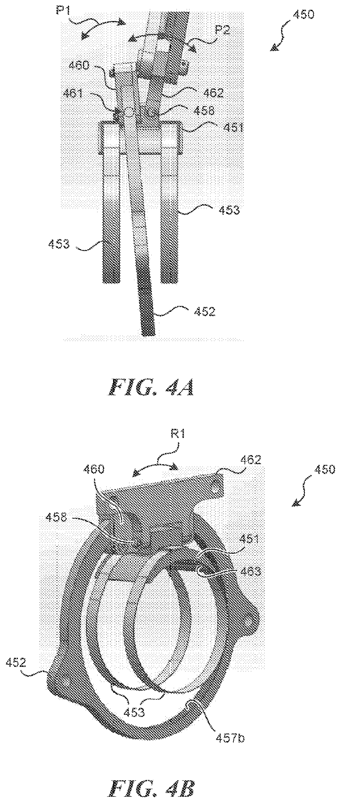

Figures 4A and 4B are side and isometric illustrations, respectively, of a bearing 450 configured in accordance with another embodiment of the present technology. Like the bearing 250 described above with reference to Figures 2A-2C, the bearing 450 shown in Figures 4A and 4B allows for three degrees of rotational/pivotal motion among a receiver interface member 451, a receiver attachment member 462, and a concentrator attachment member 452. The bearing 450 also includes multiple bands 453 that are positioned to at least partially surround and engage with a receiver (not shown in Figures 4A, 4B for purposes of clarity) so as to firmly connect the receiver interface member 451 to the receiver with a curved engaging surface 463 (Figure 4B) in contact with the receiver. In place of the fasteners described above with reference to Figures 2A and 2B, the bands 453 can be tightened around both the receiver and the receiver interface member 451 using standard banding equipment, such as is used for packing crates. The concentrator attachment member 452 is pivotably attached to the receiver interface member 451 with a concentrator pin 461 (Figure 4A), and the receiver attachment member 462 is pivotably attached to the receiver interface member 451 with a receiver pin 458.

A second bearing surface 457b (Figure 4B) carried by the concentrator attachment member 452 is in surface-to-surface contact with a corresponding first bearing surface (not visible in Figure 4B) carried by the receiver interface member 451. A retainer 460 keeps the concentrator attachment member 452 and its second bearing surface 257b in contact with the first bearing surface of the receiver interface member 451. Accordingly, the concentrator attachment member 452 rotates relative to the receiver interface member 451, as indicated by arrow R1. As shown in Figure 4A, the concentrator attachment member pivots relative to the receiver interface member 451, as indicated by arrow P1, and the receiver attachment member 462 pivots relative to the receiver interface member 451 as indicated by arrow P2.

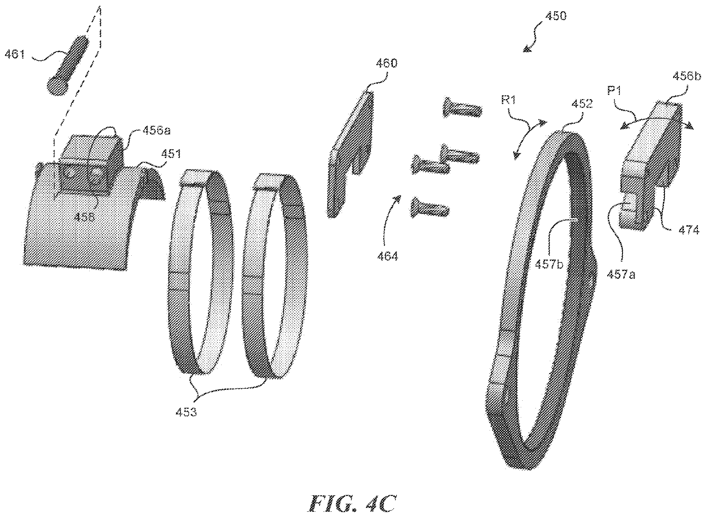

Figure 4C is a partially schematic, exploded isometric view illustrating several of the components described above with reference to Figure 4A-4B, including the receiver interface member 451. The receiver interface member 451 includes a first element 456a that is fixed relative to the receiver interface member 451, and that carries both the receiver pin (or pin stubs) 458 and the concentrator pin 461. The receiver pin 458 is pivotably connected to the second element 456b via holes (not visible in Figure 4C) in the inwardly facing surfaces of two downwardly projecting tabs 474 to allow the second element 456b to pivot relative to the first element 456a, as indicated by arrow P1. The second element 456b includes the first bearing surface 457a that engages in surface-to-surface contact with the second bearing surface 457b carried by the concentrator attachment member 452. The retainer 460 is attached to the second element 456b with fasteners 464 to prevent excess axial motion of the concentrator attachment member 452.

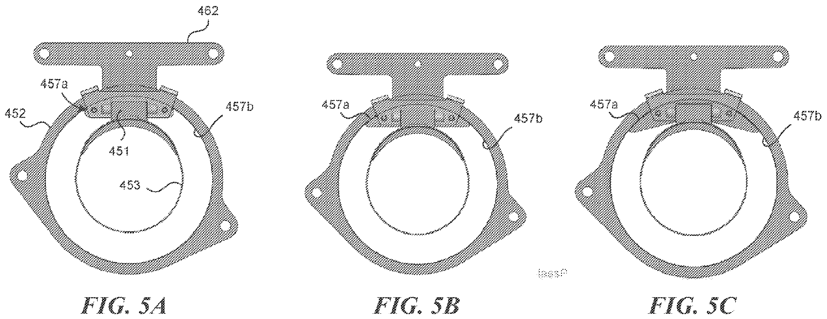

As the second bearing surface 457b engages with and rotates relative to the first bearing surface 457a (as indicated by arrow R1), the motion creates friction which may be undesirable because it increases wear rates. On the other hand, the face-to-face contact of these surfaces provides stability for the overall movement of the concentrator relative to the receiver. Depending upon the particular installation, the need for increased stability may offset (or be offset by) the effects of friction. Accordingly, as shown in Figures 5A-5C, the first bearing surface 457a can have different arc lengths or circumferential extents, depending on the particular installation. For example, the first bearing surface 457a can have a first arc length or circumferential extent (shown in Figure 5A), a second arc length or circumferential extent greater than the first (shown in Figure 5B), or a third arc length or circumferential extent (shown in Figure 5C), greater than both the first and second arc lengths or circumferential extents. The arrangement selected for a particular combination of receiver and concentrator can be based on the angle through which the concentrator rotates relative to the receiver, the speed with which the concentrator rotates relative to the receiver, the weight of the concentrator, and/or other factors. In any of these embodiments, the arc length/circumference of the bearing surfaces can be significantly less than 360°. In general, shorter arc lengths reduce material cost, and longer arc lengths reduce friction and/or stress.

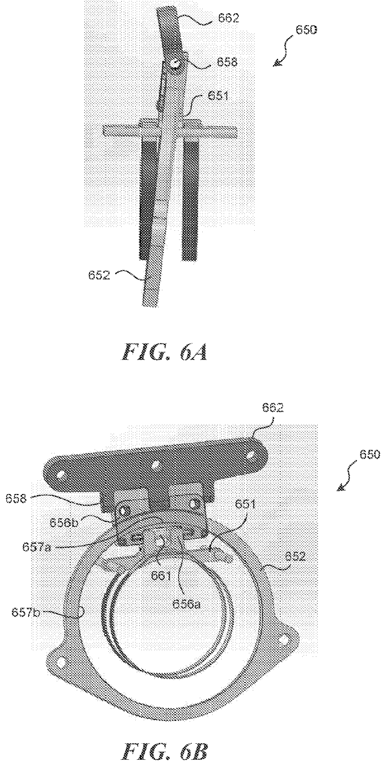

In the embodiments described above with reference to Figures 2A-5C, both the concentrator attachment member and the receiver attachment member are pivotably attached to the receiver interface member. This can be considered a "parallel" arrangement because the receiver and concentrator attachment members are separately pivotable relative to the same receiver interface member. In another embodiment, shown in Figures 6A-6B, a representative bearing 650 has pivot joints arranged in "series" rather than in parallel. Referring to Figure 6B, the bearing 650 includes a receiver interface member 651 having a fixed first element 656a and a second element 656b pivotably attached to the first element 656a with a concentrator pivot pin 661. The second element 656b has an outwardly-facing first bearing surface 657a. A corresponding concentrator attachment member 652 has an inwardly-facing second bearing surface 657b that contracts and rotates relative to the first bearing surface 657a. As in the embodiments described above, the concentrator attachment member 652 can therefore rotate and pivot relative to the receiver interface member 651. Unlike the embodiments described above, a corresponding receiver attachment member 662 is pivotably attached not to the receiver interface member 651, but to the second element 656b, via a receiver pivot pin 658. Comparing Figure 6A with Figure 4A illustrates the different locations of the pivot axes. An advantage of the arrangement shown in Figure 4A relative to that shown in Figure 6A is that the tendency for the relative movements of the receiver and the concentrator to "fight" each other can be reduced because each pivots relative to a common element. An advantage of both arrangements is that the multiple degrees of pivotal freedom can better accommodate the motion of the receiver relative to the concentrator and relative to the enclosed structure from which it is suspended.

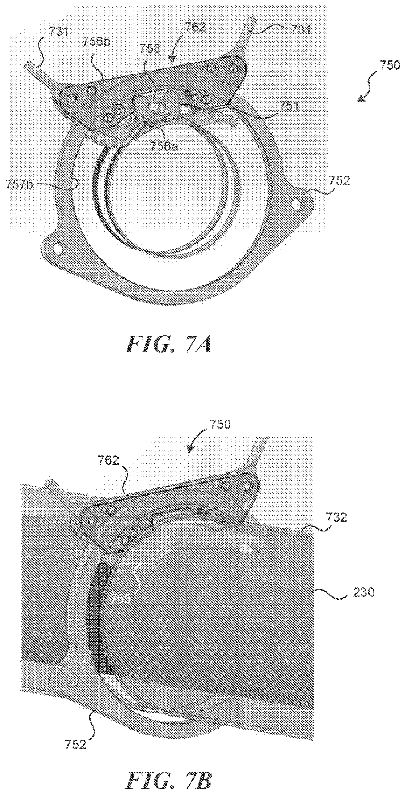

Figures 7A and 7B illustrate a bearing 750 having an arrangement in which a concentrator attachment member 752 pivots relative to a receiver interface member 751, as described above, but the concentrator attachment member 752 and a corresponding receiver attachment member 762 pivot together relative to the receiver interface member 751 (Figure 7A). Accordingly, the receiver interface member 751 includes a fixed first element 756a that is pivotably attached to a corresponding second element 756b via a pivot pin 758. The second element 756b both operates as the receiver attachment member 762 and rotatably houses the concentrator attachment member 752, which has an inwardly facing bearing surface 757b. Accordingly, as the second element 756b pivots about the pivot pin 758 relative to the first element 756a, both the receiver attachment member 762 and the concentrator attachment member 752 pivot through the same arc. Receiver suspension members 731 attach to the receiver attachment member 762 with spherical ball joints. Shield supports 755 (Figure 7B) carry a corresponding transmissive shield 732 at an offset relative to the receiver 230.

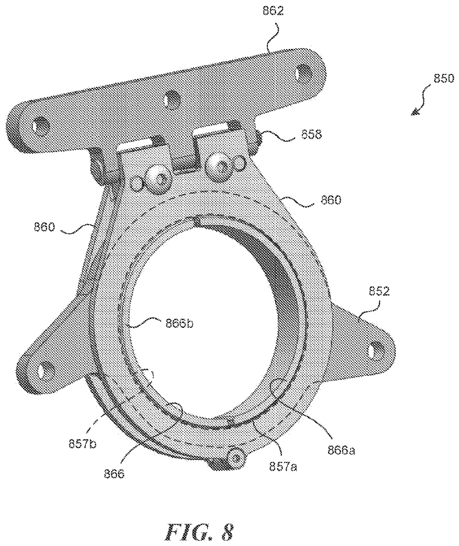

Figure 8 illustrates a bearing 850 configured in accordance with an embodiment for which only the receiver attachment member 862 pivots relative to a fixed inner bearing element 866. The inner bearing element 866 has an outwardly facing first bearing surface 857a that is in surface-to-surface contact with a inwardly facing second bearing surface 857b carried by a corresponding concentrator attachment member 852. The concentrator attachment member 852 is held captive (against axial motion) by two retainer plates 860. The receiver attachment member 862 pivots relative to the concentrator attachment member 852 and the inner bearing element 866 about a pin 858. Accordingly, the motion facilitated by the bearing 850 is generally similar to that of the bearing 50 described above with reference to Figure 1D. However, unlike the arrangement described above with reference to Figure 1D, the inner bearing element 866 can include two completely separable pieces 866a, 866b, rather than a single slitted piece. This arrangement reduces the likelihood for scratching the sensitive coating on the corresponding receiver. Instead of spreading the opposing halves of a monolithic inner bearing element that has a slit in it, each of the two separate inner bearing elements 866a, 866b can be placed directly at the desired location along the receiver, after which the concentration attachment member 852 is positioned around the inner bearing element 866, the retainer plates 860 are fastened around the concentrator attachment member 852, and the retainer attachment member 862 is connected to the retainer plates 860. Because the separate halves 866a, 866b of the inner bearing element 866 are applied directly to the target position along the receiver (rather than being slid along the length of the receiver to the target location), the likelihood for scratching or otherwise damaging the receiver (and in particular, the radiation absorptive coating on the receiver) is reduced.

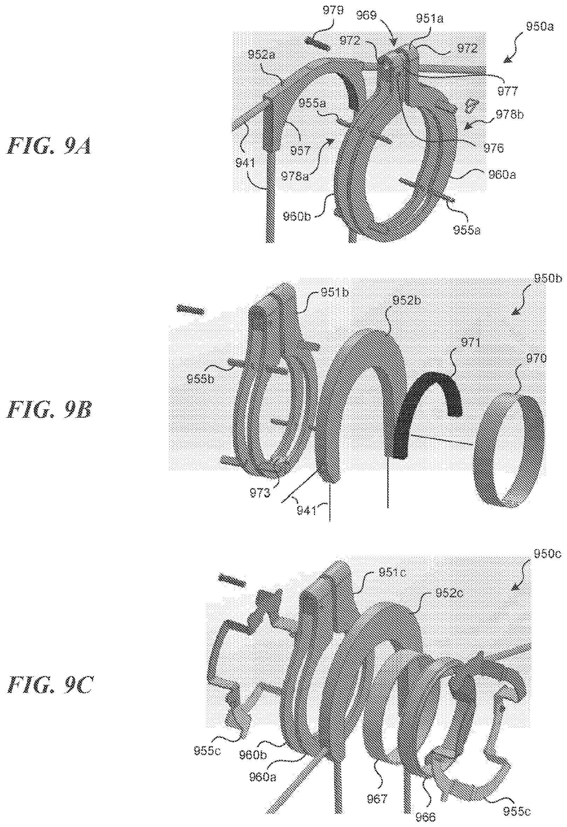

Figures 9A-9C illustrate still further bearings in accordance with representative embodiments of the present technology. Figure 9A illustrates a representative bearing 950a that includes a receiver interface member 951a. The receiver interface member 951a can include two facing plates 960a, 960b, each of which carries shield supports 955a for supporting a transmissive shield (as described above with reference to Figures 2A-2B) around the receiver. A corresponding concentrator attachment member 952a is positioned between the facing plates 960a, 960b and is attached to concentrator suspension members 941. An inwardly facing bearing surface 957 makes direct contact with the receiver. The plates 960a, 960b wrap around the receiver in the form of two arms 978a, 978b that are spaced apart by a slit 969. A fastener 979 extends through apertures 976 in both the first arm 978a and a tab 977 of the second arm 978b to clamp the two arms 978a, 978b around the receiver and secure the receiver interface member 951a to the receiver. A pin (not shown in Figure 9A) rotatably connects a corresponding receiver attachment member (not shown in Figure 9A) to the receiver interface member 951a via apertures 972.

Figure 9B illustrates another bearing 950b having a receiver interface member 951b with a configuration generally similar to that described above with reference to Figure 9A. A concentrator attachment member 952b fits in between the facing plates of the receiver interface member 951b. A low friction (e.g., graphalloy) bushing 971 is positioned in between the concentrator attachment member 952b and a corresponding wrap 970 (e.g., a metal wrap) positioned around the receiver to facilitate the relative rotation between the concentrator attachment member 952b and the receiver.

Figure 9C illustrates a bearing 950c in accordance with still another embodiment for which a corresponding receiver interface member 951c has a clamp arrangement generally similar to those described above with reference to Figures 9A and 9B, and a corresponding concentrator attachment member 952c fits between facing plates 960a, 960b of the receiver interface member 951c. An inner bearing element 966 is placed around the receiver, and an outer bearing element 967 is positioned between the inner bearing element 966 and the concentrator attachment member 952c. Corresponding shield supports 955c can be made from sheet stock.

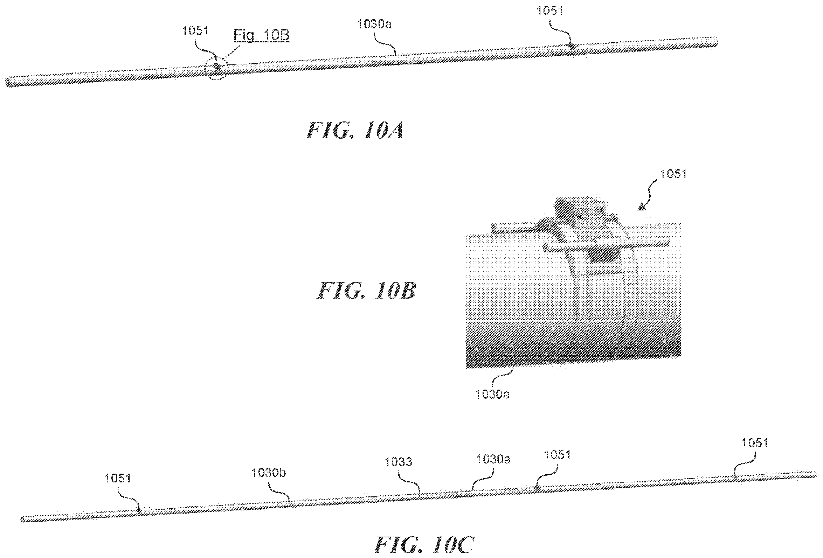

Figures 10A-10F illustrate a representative method for installing bearings on a receiver, connecting a concentrator to the receiver, and suspending the concentrator and receiver from an overhead support. Figure 10A illustrates a receiver section 1030a on which multiple (e.g., two) receiver interface members 1051 have been installed. For purposes of illustration, the receiver interface members 1051 are similar to those shown in Figures 4A-4C. It will be understood that similar techniques are used to install bearings having other configurations, e.g., those shown in Figures 2A-2C. In the embodiment shown in Figure 10A, the receiver interface member 1051 can be positioned directly at the desired location without having to slide it along the length of the receiver section 1030a. Accordingly, the likelihood for damaging the sensitive receiver coating is reduced. Instead, once the receiver interface member 1051 is in position, it can be securely attached to the receiver section 1030a using bands as described above. The bands can be initially open-ended so that they, too, can be placed directly at the desired location without being slid along the length of the receiver section 1030a. Figure 10B is an enlarged illustration showing the installed bearing receiver interface member 1051.

In Figure 10C, multiple receiver sections 1030a, 1030b have been joined to each other, for example, via a weld joint 1033. Each section 1030a, 1030b can include one or more receiver interface members 1051, which can be pre-attached before joining, or attached after joining.

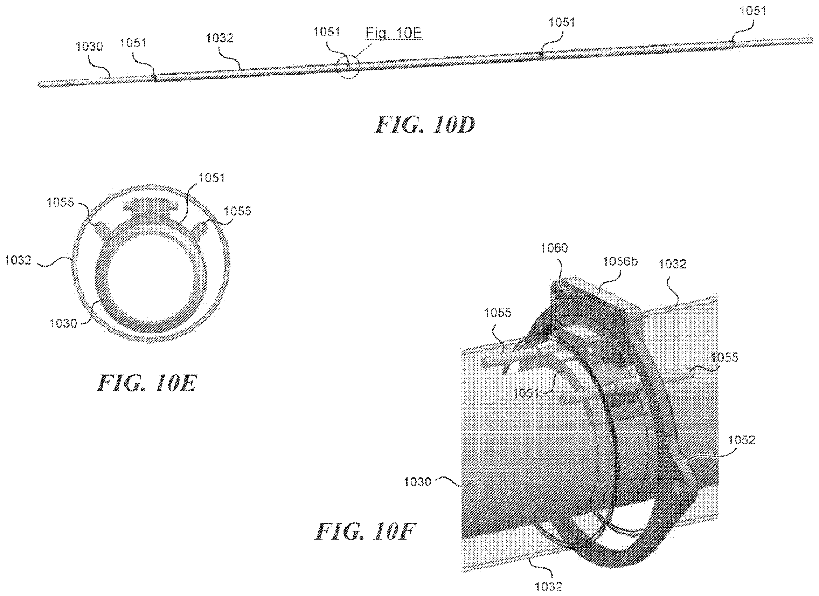

As shown in Figures 10D and 10E, shield sections 1032 have been installed between neighboring receiver interface members 1051. Accordingly, the receiver interface members 1051 are deliberately sized small enough to allow the shield sections 1032 to be passed over the installed receiver interface members 1051 and dropped into position. Figure 10F shows individual shield sections 1032 after they have been put in position and are resting on corresponding shield supports 1055. With the shields 1032 in position, the concentrator attachment member 1052 is rotatably and pivotably connected to the receiver interface member 1051 via the second element 1056b, and retainer 1060.

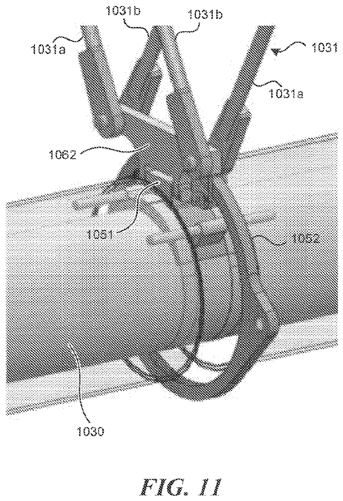

In Figure 11, the receiver attachment member 1062 has also been pivotably attached to the receiver interface member 1051. At this point, the receiver suspension members 1031 can be attached to the receiver attachment member 1062 and connected to an overhead support. A similar operation is then used to attach the concentrator attachment member 1052 to a corresponding concentrator.

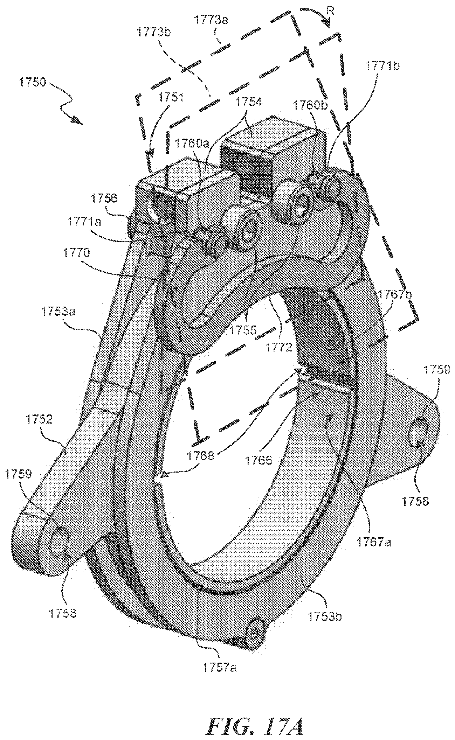

The receiver suspension members 1031 can include two types: first suspension members 1031a that provide the primary support for the receiver 1030, and second receiver suspension members 1031b that are provided to restrict or prevent the tendency for the bearing to slip or rotate relative to the receiver 1030. In another embodiment described below with reference to Figures 17A-17B, the bearing can be configured to eliminate the need for the second "anti-rotation" suspension members 1031b.

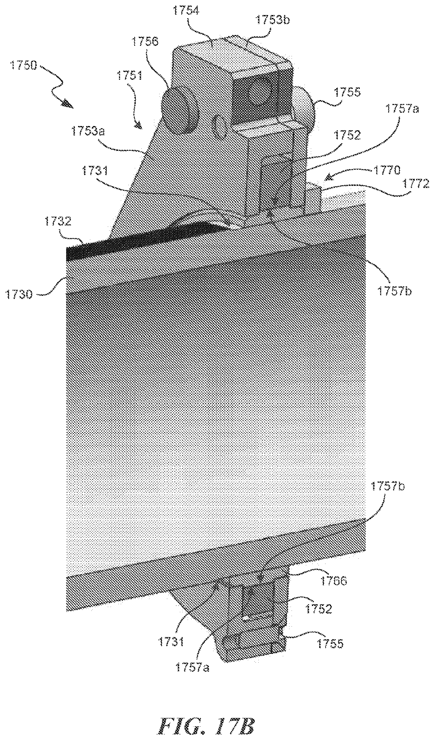

Figures 17A and 17B illustrate a bearing 1750 configured in accordance with still another embodiment of the present technology. Referring first to Figure 17A, the bearing 1750 can include an inner bearing element 1766 positioned around a corresponding receiver (described further below with reference to Figure 17B), a concentrator attachment member 1752 in rotational contact with the inner bearing element 1766, and a receiver interface member 1751 that is fixed relative to the inner bearing element 1766. The bearing 1750 can be held in place relative to the receiver with a biasing element 1770 (e.g., a spring clamp). In this particular embodiment, the concentrator attachment member rotates relative to the receiver, but does not pivot, e.g., in the manner described above with reference to Figures 2A-2C.

The inner bearing element 1766 can include multiple (e.g., two) circumferentially extending sections 1767a, 1767b that are positioned around the corresponding receiver, and that may be separated from each other by gaps 1768. This aspect of the arrangement is similar to that discussed above with reference to Figure 8. In other embodiments, the inner bearing element 1766 can have a one-piece construction, with a slit, as described above with reference to Figure 1D. However, an expected advantage of the multi-piece construction shown in Figure 17A is that it is less likely to scratch or otherwise damage the coating on the receiver when it is installed.

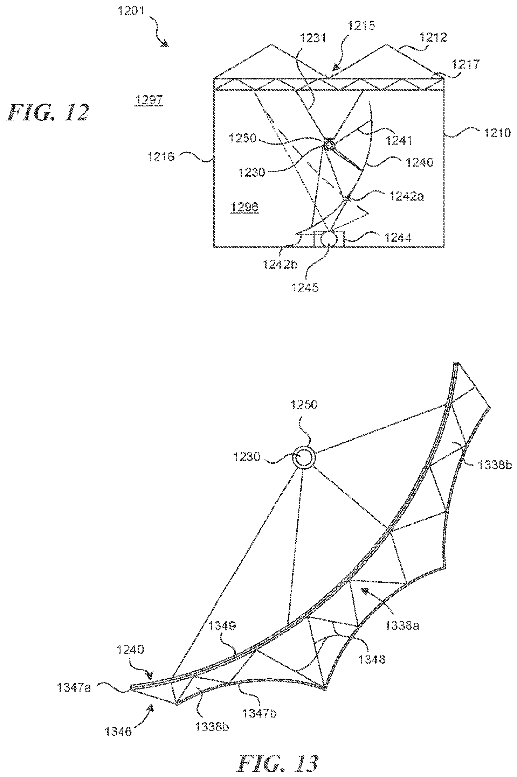

The inner bearing element 1766 has an outwardly-facing bearing surface 1757a that rotatably engages with an inwardly facing surface carried by the concentrator attachment member 1752 and described further below with reference to Figure 17B. Accordingly, the concentrator attachment member 1752 can rotate relative to the inner bearing element 1766 and the receiver to which it is attached. The concentrator attachment member 1752 can include one or more concentrator attachment features 1758, e.g., holes 1759 which can in turn be connected to tension members to support a corresponding concentrator (e.g., as shown and described above with reference to Figure 12).

The concentrator attachment member 1752 is rotatable relative to the inner bearing element 1766, and the receiver interface member 1751 is fixed relative to the inner bearing element 1766. In a particular embodiment, the receiver interface member 1751 includes first and second face plates 1753a, 1753b connected to each other with mounting screws 1755 or other suitable devices. At least one of the face plates 1753a, 1753b can include a boss 1754 having holes or other suitable features for receiving a corresponding receiver attachment member (e.g., the receiver attachment member 262 described above with reference to Figure 2C).

The boss 1754 (or another portion of the receiver interface member 1751) can include one or more projections; two are shown in Figure 17A as a first projection 1760a and a second projection 1760b. Each projection can be formed by a corresponding pin 1756 that extends through the boss 1754. The projections 1760a, 1760b are positioned to clamp the bearing 1750 in position, e.g., with the biasing element 1770.

In a particular embodiment, the biasing element 1770 can include first and second end portions 1771a, 1771b that engage with the corresponding projections 1760a, 1760b. The biasing element 1770 can have a generally "C-shaped" configuration, with a central portion 1772 located between the first and second end portions 1771a, 1771b.

During installation, the inner bearing element 1766 is placed around the outer circumference of the receiver, and the concentrator attachment member 1752 is placed in rotational contact with the inner bearing element 1766. The face plates 1753a, 1753b of the receiver interface member 1751 are fastened in position on opposing sides of the concentrator attachment member 1752. The biasing element 1770 is then used to bias the receiver interface member 1751 into contact with the inner bearing element 1766, and bias the inner bearing element 1766 into contact with the corresponding receiver. For example, the central portion 1772 of the biasing element 1770 can be preloaded (e.g., pre-bent) to extend downwardly, so that it does not easily slip horizontally into the gap between the outer surface of the receiver and the first and second projections 1760a, 1760b. Instead, the operator can slide the biasing element 1770 into a tilted position, with the first and second end portions 1771a, 1771b in contact with the corresponding projections 1760a, 1760b, but with the biasing element 1770 tilted. Accordingly, the biasing element 1770 is initially in a first plane 1773a that is tilted relative to a second plane 1773b that is normal to the longitudinal axis of the receiver. When an operator forces the biasing element 1770 from the first plane 1773a to the second plane 1773b as indicated by arrow R (e.g., by tapping on the central portion 1772 with a hammer, using pliers, or otherwise applying a force to the central portion 1772), the biasing element 1770 forces the first and second projections 1760, (and therefore, the receiver interface member 1751) upwardly in a direction away from the receiver. This in turn forces the lower portion of the receiver interface member 1751 into engagement with the lower portion of the inner bearing element 1766, and in turn forces the lower portion of the inner bearing element 1766 into engagement with the lower portion of the receiver. The result is that the biasing element 1770 fixes the bearing 1750 in position relative to the receiver.

Figure 17B is a partially schematic, cross-sectional illustration of the bearing 1750 shown in Figure 17A, installed on a receiver 1730. The receiver 1730 can include an outer surface 1732 having a circumferentially-extending groove 1731, e.g., extending around the entire circumference of the receiver 1730. The groove 1731 can be machined or otherwise precisely formed in the outer surface 1732 to provide a consistently round and smooth surface against which the inner bearing element 1766 and biasing element 1770 are placed. For example, a typical existing receiver can have an outer diameter with a tolerance range of up to 1.2 millimeters. Such a tolerance range is inconsistent with the precision typically required for the bearing 1750 to function properly. Accordingly, the manufacturer must maintain a stock of multiple bearings or bearing components (e.g., inner bearing elements 1766 and biasing elements 1770), each of which is specific for a receiver (or portions of a receiver) having a different outer diameter. This process (called "binning") is expensive because it requires more and different sizes of bearings or bearing components to be kept on hand as the facility is built, and it requires the installer to first determine which bearing/component is required, before installing it, for each location at which a bearing is to be installed. Conversely, using the present technology, the tolerance on the receiver outer diameter can be reduced significantly, e.g., brought to within 0.1 millimeter or to within 0.05 millimeter.

An advantage of the groove arrangement described above is that it allows the manufacturer to use tubing for the receiver 1730 that may be slightly out-of-round, and/or may have surface nonuniformities and/or other nonuniformities that would otherwise interfere with the proper performance of the bearing 1750. Rather than requiring that the entire receiver 1730 be manufactured to the close tolerances best suited to the bearing 1750, the groove 1731 can provide such tolerances only at the locations where the bearing 1750 is installed. A further advantage is that the requirement for "binning" can be reduced or eliminated. Accordingly, the overall cost of providing and installing the receiver and the bearing can be reduced.

Once the inner bearing element 1766 is in place, within the circumferentially-extending groove 1731, the concentrator attachment member 1752 is slipped over the inner bearing element 1766, with its inwardly facing surface 1757b in rotational contact with the outwardly facing surface 1757a of the inner bearing element 1766. The first and second face plates 1753a, 1753b are assembled around the concentrator attachment member 1752 and in contact with the inner bearing element 1766. The biasing element 1770 (the central portion 1772 of which is visible in Figure 17B) then installed in the manner described above with reference to Figure 17A.

One feature of the arrangement described above with reference to Figures 17A, 17B is that the circumferentially extending groove can reduce overall system cost by providing a precisely defined surface in only limited regions of the receiver, e.g., only where the bearing is installed. As discussed above, this reduces or eliminates (a) the need for providing such high precision surfaces at portions of the receiver that do not require it and/or (b) the need to keep bearings and/or bearing components of multiple sizes on hand during an installation operation.

Another feature of the arrangement described above with reference to Figures 17A and 17B is that the biasing element 1770 can provide enough force (e.g., normal and/or frictional force) to secure the bearing in position relative to the receiver, so as to eliminate some or all of the anti-rotation suspension members 1031b described above with reference to Figure 11. For example, the force provided by the biasing element can prevent slippage between the inner bearing element and (a) the receiver, and/or (b) the receiver interface member. In a large installation, thousands or tens of thousands of anti-rotation rods would otherwise be required to support the associated bearings in the proper position. Accordingly, the biasing elements can significantly reduce the expense of the overall installation, as well as the system complexity.

### 3.0 Representative Overall Installation

Figure 12 is an end view of a portion of an overall system 1201 that includes an enclosure 1210 that provides a boundary between a protected interior region 1296 and an exterior region 1297 having upright supports 1216 and overhead supports 1217. The overhead supports 1217 support a corresponding roof 1212, and also support a corresponding receiver 1230 and concentrator 1240. In particular, receiver suspension members 1231 are attached directly to the overhead support 1217, rather than to the gutters 1215 located between neighboring roof sections. An advantage of this arrangement is that it reduces the likelihood that the gutters 1215 will be damaged by the weight of the receivers 1230 and concentrators 1240, and allows the gutters 1215 to be made from lighter, thinner and/or less expensive materials.

A bearing 1250 having any of the configurations described above with reference to Figures 2A-10, 17A and 17B is connected between the receiver 1230 and the concentrator 1240. The concentrator 1240 is suspended from the receiver 1230 via concentrator suspension members 1241. A motor 1244 drives a winch 1245, which in turn rotates the concentrator 1240 relative to the receiver 1230 via two drivelines 1242a, 1242b. The motor 1244 and winch 1245 can be positioned below the concentrator 1240 and the drivelines 1242a, 1242b can be connected directly to the concentrator 1240 without the pulleys described above with reference to Figure 1B. Accordingly, this aspect of the arrangement can reduce the cost and complexity of installing and operating the system 1201.

### 4.0 Representative Supports for Solar Concentrators, and Associated Systems and Methods

Figure 13 is a partially schematic enlarged view of the concentrator 1240 shown in Figure 12, illustrating an arrangement for providing support to the thin, mirrored surface of the concentrator 1240. In particular, the concentrator 1240 can include a relatively thin, curved reflective element 1349 that is concave relative to the focal line (along which the receiver 1230 is positioned). The reflective element 1349 can have a reflective surface and a back surface, and can be supported by multiple, spaced apart ribs 1346 positioned at intervals along the length of the concentrator 1240 (i.e., into and out of the plane of Figure 13). Each rib 1346 can include a first rib member 1347a, a second rib member 1347b, and multiple cross members 1348 connected between the first and second rib members 1347a, 1347b. Each of the first and second rib members 1347a, 1347b can be curved in opposite directions. For example, the first rib member 1347a can be concave relative to the focal line and the receiver 1230, and the second rib member 1347b can be convex relative to the focal line and the receiver 1230. This arrangement, alone or in combination with the overall truss configuration provided by the ribs and cross members can significantly improve the strength-to-weight ratio of the ribs 1346. In particular embodiments, the second rib member 1347b can be stiffer than the first rib member 1347a. For example, the second rib member 1347b can be thicker (e.g., in the cross-sectional plane of Figure 13) and/or made from a stiffer material. This in turn can allow the concentrator 1240 to deflect more in a central region 1338a than in the outer regions 1338b. Because deflection in the central region 1338a is less likely to focus radiation away from the receiver 1230, this arrangement can reduce the weight of the concentrator 1240 without compromising the focusing efficiency of the concentrator 1240.

In a particular embodiment shown in Figure 13, the first rib member 1347a and the reflective element 1349 have continuously curved, concave surfaces. The second rib member 1347b can have a discontinuously curved convex surface so as to provide the benefits of convex curvature without taking up the space that would be required for a continuously curved convex structure. In an embodiment shown in Figure 13, the second rib member has three discontinuous neighboring sections, and in other embodiments, can have other suitable numbers of such sections.

### 5.0 Representative Drivelines and Associated Systems and Methods

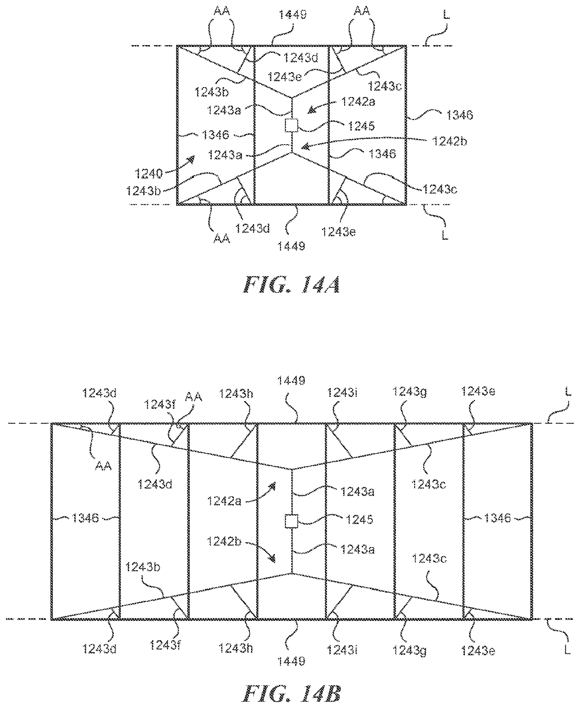

Figure 14A is a partially schematic illustration of the concentrator 1240 as seen from below. The concentrator 1240 is supported by four ribs 1346 that extend transverse to the concentrator focal line, and is positioned above a corresponding drive mechanism. The drive mechanism can include a winch 1245, e.g., having a rotatable drum. The winch 1245 is connected to the concentrator 1240 with two drivelines 1242a, 1242b, as discussed above with reference to Figure 12. Each driveline 1242a, 1242b can include multiple sections, including a first section 1243a connected directly to the winch 1245, second and third sections 1243b, 1243c that branch from the first section 1243a, and fourth and fifth sections 1243d, 1243e that branch from the second and third sections 1242b, 1242c, respectively. Each of the second-fifth sections 1242b-1242e is connected to a common compression member 1449 that is aligned (e.g., generally parallel) to the concentrator focal line. In a particular embodiment, the compression member 1449 is located at or near the edge of the concentrator 1240, and each section 1242b-1242e is connected at an individual attachment angle AA. The individual attachment angles AA can differ from one location to the next. In general, each attachment angle AA is deliberately selected so that, together, any loads that are not directly along the longitudinal axis L of the compression member 1249 are cancelled. Accordingly, the compression member 1249 need only take up compression loads and need not be subjected to bending loads. This in turn can reduce the size, weight and cost of the compression member 1249.

Figure 14B illustrates an arrangement similar to that of Figure 14A, but having eight ribs 1346 rather than four ribs and, accordingly, nine driveline segments 1243a-1243i connected in a manner generally similar to that discussed above with reference to Figure 14A. As discussed above, the attachment angles AA for each attached driveline segment can be sized to eliminate bending loads on the corresponding compression members 1449. In still further embodiments, the concentrator can have other numbers of ribs, e.g., six ribs.

### 6.0 Representative Receiver Supports and Associated Systems and Methods

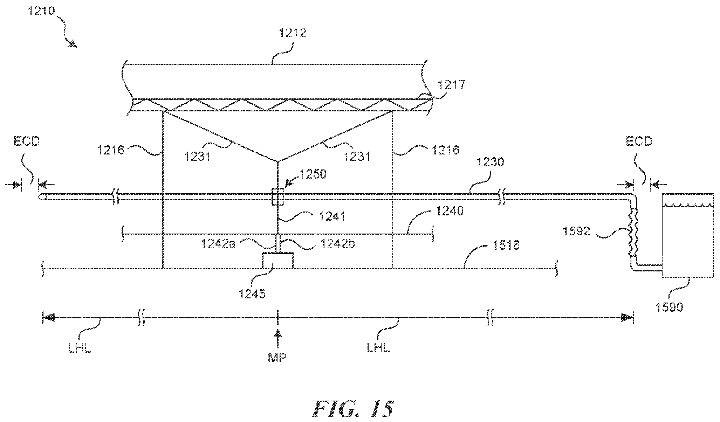

Figure 15 is a partially schematic, side view illustration of a portion of the enclosure 1210 described above with reference to Figure 12. As shown in Figure 15, the receiver 1230 is suspended from the overhead supports 1217 by the receiver suspension members 1231. The receiver suspension members 1231 shown in Figure 15 extend both along the length of the receiver 1230 and transverse to the longitudinal axis of the receiver 1230 (as shown in Figure 12) so as to fix the receiver 1230 both laterally and longitudinally. The receiver suspension members 1231 are attached to the bearing 1250, which also supports the concentrator 1240 (an edge of which is visible in Figure 15) via the concentrator suspension members 1241. Opposing edges of the concentrator 1240 are attached to the winch 1245 via corresponding drivelines 1242a, 1242b. The winch 1245 can rest on the floor 1518 of the enclosure 1210.

As shown in Figure 15, the receiver 1230 is fixed longitudinally at approximately its midpoint MP. In this context, "approximately" refers to a point within 10% of the midpoint MP. The midpoint MP refers generally to the point halfway between the right-most point of the receiver 1230, and the left-most point of the receiver 1230. Accordingly, the receiver 1230 has a first longitudinal half-length LHL extending to the right of the midpoint MP, and a second longitudinal half-length LHL extending to the left of the midpoint MP. The right portion of the receiver 1230 is attached to a water source 1590, and includes a flexible coupling 1592 to accommodate longitudinal expansion and contraction of the receiver 1230 under varying thermal loads. Accordingly, the length of the flexible coupling 1592 is not considered as part of the length of the receiver 1230 for purposes of determining the midpoint MP. Because the receiver 1230 is attached approximately at its midpoint MP, the total expansion and contraction distance (assuming uniform thermal loading) is divided approximately equally between the right half and the left half of the receiver 1230, as indicated by distances ECD. For a representative receiver having a length of 180 meters, the total expansion/contraction distance is expected to be about 800 millimeters. By dividing this value over two segments (as indicated by the two expansion contraction distances ECD shown in Figure 15), the loading placed on other components can be significantly reduced. For example, the side loads placed on the receiver suspension members along the length of the receiver 1230, and on the concentrator suspension members along the length of the concentrators can be significantly reduced. By reducing the loading, the size and the weight of the components can be reduced. By reducing the size and weight of these components, with the amount of shading that these components produce over the concentrator can also be reduced. As a result, the overall efficiency of the system can be significantly improved when compared with the system described above with reference to Figure 1A.

### 7.0 Representative Cooling Systems and Methods

In at least some embodiments, electrical components with suitable operational ratings at the elevated temperatures encountered within the enclosures described above, are not readily available, or are not available at an economically feasible cost. For example, common commodity power supplies generally have thermal shutdown limits at or slightly above 70°C ambient, and have de-rating curves starting at 50°C. The ambient temperature inside the enclosures described above can typically reach 70-80°C regularly during the day. Accordingly, embodiments described below include thermal management arrangements for sensitive electronics. Several methods for managing the thermal environment in which the sensitive electronics are placed can include air conditioning, Peltier cooling, introducing external air and thermal storage. Thermal storage techniques can be particularly practical for cooling sensitive electronics within a glass solar collector enclosure. In at least some embodiments, the thermal storage medium can include a phase change material to limit the temperature of the components that are to be protected. Phase change materials have a phase transition temperature that is constant during the phase change. Several phase change materials are commercially available and have phase change temperatures at from about 45°C to about 50°C, which are particularly suitable for protecting the foregoing electronics. Representative phase change materials include paraffins, for example, paraffin C22 and paraffin C23. Representative materials can have latent heat capacities of 150 to 250 kJ/kg. In a representative application, an extreme temperature day results in 10.7 hours above 50°C within the enclosure. To dissipate 100 watts from the sensitive components, with a latent heat capacity of 200 kJ/kg, requires about 20 kg of phase change material.

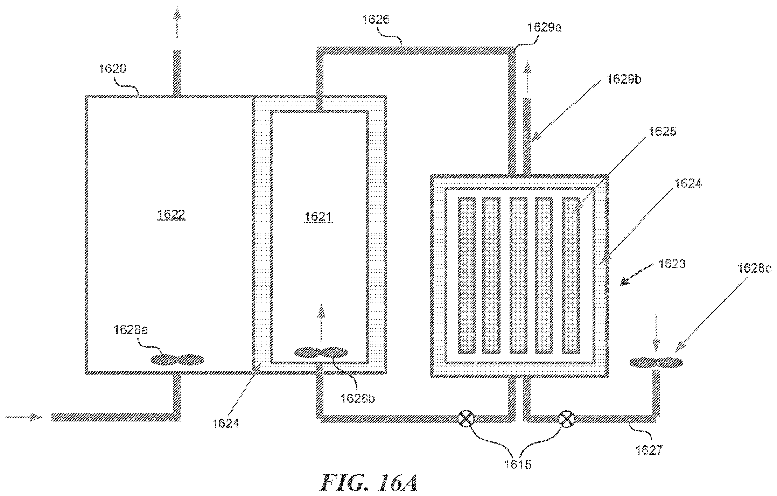

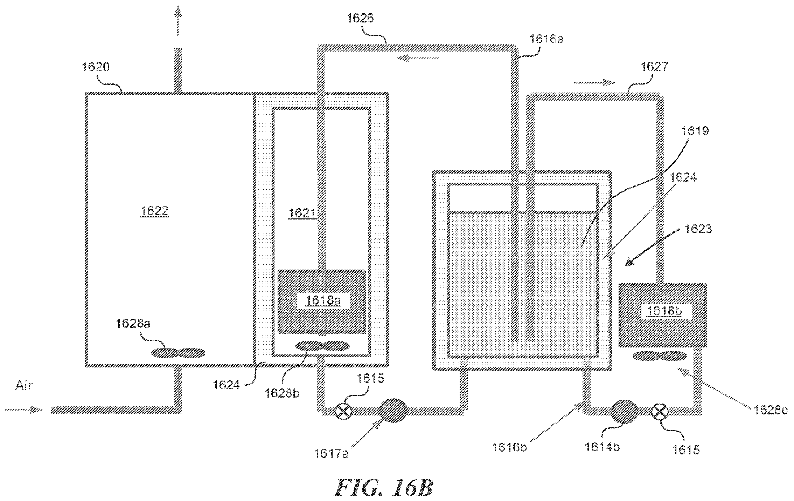

Figures 16A and 16B illustrate representative cooling arrangements in accordance with embodiments of the present technology. Figure 16A illustrates a control box 1620 containing heat-sensitive electronics 1621 and other electronics (e.g., less heat-sensitive electronics) 1622. The sensitive electronics 1621 can be insulated from the other electronics 1622 and from the interior of the glass house enclosure in which they are positioned by insulation 1624.

The arrangement can further include a storage tank 1623 housing a phase change material 1625. The storage tank 1623 can also include insulation 1624 to maintain a constant or nearly constant temperature within. A daytime cooling loop 1626 directs a working fluid from the storage tank 1623 to the sensitive electronics 1621. For example, the daytime cooling loop 1626 can include air ducts 1629a that carry air which is directed over the sensitive electronics 1621 via a blower 1628b to collect heat from the sensitive electronics 1621, which is transferred to the phase change material 1625 in the storage tank 1623. As the heat is transferred from the sensitive electronics 1621 to the phase change material 1625, the phase change material 1625 melts while maintaining an approximately constant temperature. Accordingly, during normal operation, a portion of the phase change material 1625 in the storage tank 1623 is in a liquid phase, and a portion is in a solid phase.

The arrangement shown in Figure 16A also includes a nighttime re-charge flow path 1627 which is used to recharge (e.g., solidify) the phase change material 1625 that was liquefied during the day as a result of receiving heat from the sensitive electronics 1621. Accordingly, the recharge flow path 1627 can include a blower 1628c that directs cool air (e.g., from outside the overall glass house enclosure) over the phase change material 1625 to solidify it. Air ducts 1629b conduct the cooling air from the external environment over the phase change material 1625, after which it is exhausted. Optional valves 1615 can be activated automatically or manually to control which flow path (the daytime cooling loop 1626 or the nighttime re-charge path 1627) is active at any point in time.

The other electronics 1622 within the control box 1620 can also be cooled, but to a lesser degree and/or via less heat transfer than the sensitive electronics 1621. For example, the other electronics 1622 can receive a flow of cooling air via a blower 1628a.

Figure 16B illustrates another arrangement in which the storage tank 1623 includes water 1619 that operates both as a working fluid and a thermal storage medium. Accordingly, the daytime cooling loop 1626 can include insulated water pipes 1616a that conduct cooling water from the storage tank 1623 to a first radiator 1618a. A fan or blower 1628b directs air heated by the sensitive electronics 1621 over the first radiator 1618a to transfer heat from the sensitive electronics 1621 to the cooling water via the first radiator 1618a. A pump 1617a directs water back to the storage tank 1623.

The arrangement shown in Figure 16B can also include a nighttime re-charge loop 1627 that cools the water in the storage tank 1623 via a second radiator 1618b. Accordingly, the nighttime re-charge loop 1627 can include insulated water pipes 1616b and a pump 1614b that direct the warm or hot water from the storage tank 1623 to the second radiator 1618b. A fan or blower 1628c directs cool night air over the radiator 1618b to cool the water 1619.

In a particular embodiment shown in Figure 16B, the water does not undergo a phase change, unlike the phase change material described above with reference to Figure 16A. An advantage of the phase change material shown in Figure 16A is that it is expected to provide a more constant temperature than the water shown in Figure 16B. Conversely, the arrangement shown in Figure 16B may be less expensive to implement. An advantage of both embodiments shown in Figures 16A and 16B is that they can increase the cooling provided to heat sensitive electronics 1621, for example, DC power supplies.

In other embodiments, the foregoing arrangements discussed above with reference to Figures 16A and 16B can include other features. For example, in some embodiments, the control box 1620 does not segregate the sensitive electronics 1621 from the other electronics 1622. This arrangement, while potentially more expensive to implement, can extend the life of both the heat sensitive electronics 1621 and the other electronics 1622. In still further embodiments, the heat transfer process can include a thermal conduction process rather than (or in addition to) a convection process. In particular, the storage tank 1623 can be placed directly inside the portion of the control box 1620 containing the sensitive electronics 1621, or can include an uninsulated portion that is in direct thermal conduction contact with an uninsulated portion of the control box adjacent to the sensitive electronics 1621.

From the foregoing, it will be appreciated that specific embodiments of the present technology have been described herein for purposes of illustration, but that various modifications may be made without deviating from the disclosed technology. For example, the installation techniques described above with reference to Figures 10-15 can be used in conjunction with any of the bearing designs described above with reference to Figures 2A-9C and 17A-17B. In particular embodiments, several of the techniques described above with reference to the Figures can be used in conjunction with other bearing designs. For example, the rib arrangement described above with reference to Figure 13, the driveline arrangements discussed above with reference to Figures 14A-14B, and the central supporting arrangement for the receiver described above with reference to Figure 15 may be used with bearings having designs other than those described herein. In particular embodiments, the bearings described herein are applied to solar installations used for EOR operations, and in other embodiments, the bearings may be used in other suitable contexts. Aspects of the bearing described above with reference to Figures 17A-17B (e.g., the biasing element and receiver groove) can be combined with other bearing designs (e.g., those described in Figure 2A-11) in particular embodiments. Features described under particular headings above (e.g., headings 1.0, 2.0, 3.0, 4.0, 5.0, 6.0, and 7.0) may be combined with any suitable one or more features described above under one or more of any of the other headings. Further, while advantages associated with certain embodiments of the disclosed technology have been described in the context of those embodiments, other embodiments may also exhibit such advantages, and not all embodiments need necessarily exhibit such advantages to fall within the scope of the present technology. Accordingly, the present disclosure and associated technology can encompass other embodiments not expressly shown or described herein.

### REPRESENTATIVE FEATURES

1. A solar concentrator system, comprising:
   a curved reflective element oriented concave relative to a focal line;
   a curved first rib member carrying the reflective element and oriented concave relative to the focal line;
   a curved second rib member oriented convex relative to the focal line; and
   a plurality of cross members coupled between the first rib member and the second rib member.
2. The system of clause 1 wherein the curved reflective surface is continuously curved.
3. The system of clause 1 wherein the curved reflective element has a first, reflective surface facing toward the focal line and a second surface facing away from the focal line, and wherein the curved first rib member is attached directly to the second surface of the reflective element.
4. The system of clause 1 wherein the second rib element includes multiple sections and wherein a curvature of a first section is discontinuous with a curvature of a second section.
5. The system of clause 4 wherein the first and second sections are neighboring sections.
6. The system of clause 1 wherein the first rib element has a first stiffness and the second rib element has a second stiffness greater than the first stiffness.
7. The system of clause 6 wherein the curved reflective element includes a central region and an outer region, and wherein the curved reflective element is stiffer in the outer region than in the central region.
8. The system of clause 6 wherein the second rib member is thicker than the first rib member.
9. The system of clause 6 wherein the first rib member is formed from a first material and the second rib member is formed from a second material different than the first material.
10. The system of clause 1 wherein the first rib member and the second rib member together form a first rib, and wherein the system further comprises multiple ribs attached to the reflective element and spaced apart along the focal line.
11. A solar concentrator system, comprising:
   an enclosure having an overhead support and at least one transmissive surface;
   an elongated receiver suspended from the overhead support; and
   an elongated solar concentrator suspended from the receiver, the solar concentrator including:
      a curved reflective element oriented concave relative to a focal line;
      a curved first rib member carrying the reflective element and oriented concave relative to the focal line;
      a curved second rib member oriented convex relative to the focal line; and
      a plurality of cross members coupled between the first rib member and the second rib member.
12. The system of clause 10 wherein the elongated receiver includes a conduit carrying water.
13. The system of clause 10 wherein the elongated receiver has a first end positioned toward one end of the enclosure and a second end positioned toward a second end of the enclosure, and wherein the elongated receiver is fixedly suspended from the overhead support at a position approximately midway between the first and second ends of the elongated receiver.
14. The system of clause 10, further comprising a drive mechanism coupled to the curved reflective element to rotate the curved reflective element relative to the receiver.
15. A solar concentrator system, comprising:
   an elongated, tubular receiver having an outer surface with a circumferentially-extending groove;
   an elongated, trough-shaped solar concentrator; and
   a bearing coupled to the receiver and the concentrator to support rotation of the concentrator relative to the receiver, the bearing comprising:
      an inner bearing element positioned in the groove of the receiver and having a first, outwardly-facing bearing surface;
      a concentrator attachment member having a second, inwardly-facing bearing surface in rotational contact with the outwardly-facing bearing surface of the inner bearing element, the concentrator attachment member having at least one concentrator attachment feature positioned to support the solar concentrator;
      a receiver interface member fixedly engaged with the inner bearing element;
      a receiver attachment member pivotably connected to the receiver interface member and having at least one receiver attachment feature positioned to support the receiver in a suspended position; and
      a biasing element positioned between the receiver and the receiver interface member to bias the inner bearing element against the receiver.
16. The system of clause 15 wherein the receiver attachment member includes first and second projections, and wherein the biasing element has an open C-shape with a first end, a second end, and a central portion between the first and second ends, and wherein the first end is biased into contact with the first projection, the second end is biased into contact with the second projection, and the central portion is biased into contact with the receiver.
17. The system of clause 15 wherein the projections are pins that extend from the first portion of the receiver attachment member.
18. A bearing for a solar concentrator system, comprising:
   an inner bearing element having a first, outwardly-facing bearing surface;
   a concentrator attachment member having a second, inwardly-facing bearing surface shaped to be in rotational contact with the outwardly-facing bearing surface of the inner bearing element, the concentrator attachment member having at least one concentrator attachment feature positioned to support a solar concentrator;
   a receiver interface member positionable to be fixedly engaged with the inner bearing element;
   a receiver attachment member pivotably connectable to the receiver interface member and having at least one receiver attachment feature positionable to support a solar receiver in a suspended position; and
   a biasing element positionable between the receiver and the receiver interface member to bias the inner bearing element against the receiver.
19. The bearing of clause 18 wherein the inner bearing element includes first and second separate, circumferentially-extending sections.
20. The bearing of clause 18 wherein the inner bearing element includes a single, circumferentially-extending section having a first end and a second end spaced apart from the first end by a slit.
21. The bearing of clause 18 wherein the at least one concentrator attachment feature includes a hole.
22. The bearing of clause 18 wherein the at least one receiver attachment feature includes a hole.
23. The bearing of clause 18 wherein the receiver attachment member includes first and second projections, and wherein the biasing element has an open C-shape with a first end positionable to engage the first projection, a second end positioned to engage the second projection, and a central portion between the first and second ends.
24. The bearing of clause 18 wherein:
   the concentrator element is positioned around the inner bearing element;
   the receiver interface member is fixedly engaged with the inner bearing element;
   the receiver attachment member is pivotably connected to the receiver interface member; and
   the biasing element is engaged with the receiver interface member.
25. A method for making a solar concentrator system, comprising:
   placing an inner bearing element in a groove of a receiver, the inner bearing element having a first, outwardly-facing bearing surface;
   placing a second, inwardly-facing bearing surface in rotational contact with the outwardly-facing bearing surface of the inner bearing element, the inwardly-facing bearing surface being carried by a concentrator attachment member;
   fixedly attaching a receiver interface member to the outwardly-facing bearing surface; and
   biasing the receiver interface member into engagement with the inner bearing element by positioning a biasing element between the receiver and the receiver interface member.
26. The method of clause 25 wherein positioning the biasing element includes:
   positioning the biasing element between the receiver interface member and the receiver at a non-normal angle relative to a lengthwise axis of the receiver; and
   forcing the biasing element to be at a normal angle relative to the receiver.
27. The method of clause 25, further comprising pivotably coupling a receiver attachment member to the receiver interface member.
28. The method of clause 27, further comprising suspending the receiver from an overhead structure by connecting a suspension member between the receiver attachment member and the overhead structure.
29. The method of clause 25, further comprising suspending a solar concentrator from the receiver by connecting a suspension member between the concentrator attachment member and the solar concentrator.
30. A solar concentrator system, comprising:
   an elongated receiver;
   an elongated, trough-shaped solar concentrator; and
   a bearing coupled between the receiver and the concentrator to support rotation of the concentrator relative to the receiver, the bearing comprising:
      a receiver interface member fixedly attached to the receiver and carrying a first bearing surface;
      a receiver attachment member pivotably coupled to the receiver interface member; and
      a concentrator attachment member having a second bearing surface engaged with the first bearing surface, the concentrator attachment member being pivotable relative to the receiver interface member.
31. The system of clause 30 wherein the receiver interface member includes a first element fixedly attached to the receiver and second element pivotably attached to the first element, and wherein the second element carries the first bearing surface.
32. The system of clause 30 wherein the elongated conduit is elongated along a first axis and wherein the receiver attachment member is pivotable relative to the receiver interface member about a second axis transverse to the first axis.
33. The system of clause 30 wherein the elongated conduit is elongated along a first axis and wherein the concentrator attachment member is pivotable relative to the receiver interface member about a third axis transverse to the first axis.
34. The system of clause 30 wherein the receiver attachment member and the concentrator attachment member are pivotable about different axes relative to the receiver interface member.
35. The system of clause 34 wherein the different axes are generally parallel.
36. The system of clause 30 wherein the elongated conduit is elongated along a first axis and wherein the first and second bearing surfaces are curved about a fourth axis parallel to the first axis.
37. The system of clause 30 wherein the first bearing surface is less than 360 degrees.
38. The system of clause 30 wherein the concentrator attachment member and the receiver attachment member are independently pivotable relative to the receiver.
39. The system of clause 30, further comprising:
   a first suspension member connected to the receiver attachment member; and
   a second suspension member connected between the concentrator attachment member and the concentrator.
40. The system of clause 30, further comprising:
   a plurality of ribs spaced apart along a back surface of the concentrator, wherein individual ribs include:
   a concave first member;
   a convex second member, with the first member positioned between the concentrator and the second member; and
   a plurality of cross members connected between the first and second members.
41. The system of clause 30 wherein:
   the concentrator is elongated along a longitudinal axis;
   the first member has a first thickness when intersected by a plane normal to the longitudinal axis; and
   the second member has a second thickness, greater than the first thickness, when intersected by the plane.
42. The system of clause 30, further comprising:
   a compression member elongated along a compression member axis and carried by the concentrator, the compression member having a plurality of attachment locations;
   a rotary drum carrying a drive line; and
   a plurality of connecting lines coupled between the drive line and the corresponding plurality of attachment locations, wherein corresponding angles between the connecting lines and the attachment member are sized to cancel reaction forces not aligned with the compression axis when a load is applied to the drive line.
43. A solar concentrator system, comprising:
   an elongated receiver positioned along a focal line;
   an elongated concentrator carried by and rotatable relative to the elongated receiver, the elongated concentrator being positioned to reflect incoming light to the focal line, the elongated concentrator including:
      a plurality of ribs transverse to the focal line; and
      at least one compression member elongated along a compression axis generally aligned with the focal line, the compression member having a plurality of attachment locations;
   a drive mechanism;
   a drive line connected to the drive mechanism; and
   a plurality of connecting lines coupled between the drive line and the corresponding plurality of attachment locations, wherein corresponding angles between individual connecting lines and the compression member are sized to cancel reaction forces not aligned with the compression axis when a load is applied to the drive line.
44. The system of clause 43 wherein the drive mechanism includes a winch.
45. The system of clause 43 wherein the drive mechanism includes a rotary drum.
46. The system of clause 43 wherein the at least one compression member is a first compression member, the compression axis is a first compression axis, the plurality of attachment locations is a first plurality of attachment locations, the plurality of connecting lines is a first plurality of connecting lines, and wherein the elongated concentrator includes a second compression member elongated along a second compression axis generally aligned with the focal line and having a second plurality of attachment locations, and the system further comprises:
   a second plurality of connecting lines coupled between the drive line and the corresponding second plurality of attachment locations, wherein corresponding angles between individual connecting lines of the second plurality of connecting lines and the second compression member are sized to cancel reaction forces not aligned with the second compression axis when a load is applied to the drive line.
47. The system of clause 43 wherein the compression member is positioned at an edge of the elongated concentrator.
48. The system of clause 43, further comprising:
   an enclosure having an overhead support and at least one transmissive surface, and wherein the elongated receiver is suspended from the overhead support.
49. A solar concentrator system, comprising:
   an enclosure having an overhead support and at least one transmissive surface;
   an elongated receiver suspended from the overhead support, the elongated receiver having a first end and a second end, and wherein the elongated receiver is fixedly suspended from the overhead support at an attachment position approximately midway between the first and second ends of the receiver; and
   an elongated solar concentrator suspended from the receiver, and positioned to receive radiation entering the enclosure through the transmissive surface and reflect at least a portion of the radiation to the receiver.
50. The system of clause 49, further comprising a flexible fluid coupling attached to the elongated receiver at the first end.
51. The system of clause 49 wherein the first and second ends move longitudinally from the attachment position by approximately equal amounts in response to a uniform thermal load on the receiver.
52. The system of clause 49 wherein the elongated solar concentrator is rotatable relative to the elongated receiver, and wherein the system further comprises a bearing positioned between the elongated receiver and the elongated solar concentrator, the bearing comprising:
   an inner bearing element positioned in a groove of the receiver and having a first, outwardly-facing bearing surface;
   a concentrator attachment member having a second, inwardly-facing bearing surface in rotational contact with the outwardly-facing bearing surface of the inner bearing element, the concentrator attachment member having at least one concentrator attachment feature positioned to support the solar concentrator;
   a receiver interface member fixedly engaged with the inner bearing element;
   a receiver attachment member pivotably connected to the receiver interface member and having at least one receiver attachment feature positioned to support the receiver in a suspended position; and
   a biasing element positioned between the receiver and the receiver interface member to bias the inner bearing element against the receiver.
53. The system of clause 49, further comprising a drive mechanism coupled to the concentrator to rotate the concentrator relative to the receiver.
54. The system of clause 53 wherein the concentrator further includes:
   a plurality of ribs transverse to the focal line; and
   at least one compression member elongated along a compression axis generally aligned with the focal line, the compression member having a plurality of attachment locations, and wherein the system further comprises:
   a drive line connected to the drive mechanism; and
   a plurality of connecting lines coupled between the drive line and the corresponding plurality of attachment locations, wherein corresponding angles between individual connecting lines and the compression member are sized to cancel reaction forces not aligned with the compression axis when a load is applied to the drive line.
55. The system of clause 49 wherein the receiver includes:
   a curved reflective element oriented concave relative to a focal line;
   a curved first rib member carrying the reflective element and oriented concave relative to the focal line;
   a curved second rib member oriented convex relative to the focal line; and
   a plurality of cross members coupled between the first rib member and the second rib member.

## Claims

1. A solar concentrator system, comprising:
an enclosure having an overhead support and at least one transmissive surface;
an elongated receiver suspended from the overhead support, the elongated receiver having a first end and a second end, and wherein the elongated receiver is fixedly suspended from the overhead support at an attachment position approximately midway between the first and second ends of the receiver; and
an elongated solar concentrator suspended from the receiver, and positioned to receive radiation entering the enclosure through the transmissive surface and reflect at least a portion of the radiation to the receiver.

2. The system of claim 1, further comprising a flexible fluid coupling attached to the elongated receiver at the first end.

3. The system of claim 1 or 2, wherein the first and second ends move longitudinally from the attachment position by approximately equal amounts in response to a uniform thermal load on the receiver.

4. The system of any preceding claim, wherein the elongated solar concentrator is rotatable relative to the elongated receiver, and wherein the system further comprises a bearing positioned between the elongated receiver and the elongated solar concentrator, the bearing comprising:
an inner bearing element positioned in a groove of the receiver and having a first, outwardly-facing bearing surface;
a concentrator attachment member having a second, inwardly-facing bearing surface in rotational contact with the outwardly-facing bearing surface of the inner bearing element, the concentrator attachment member having at least one concentrator attachment feature positioned to support the solar concentrator;
a receiver interface member fixedly engaged with the inner bearing element;
a receiver attachment member pivotably connected to the receiver interface member and having at least one receiver attachment feature positioned to support the receiver in a suspended position; and
a biasing element positioned between the receiver and the receiver interface member to bias the inner bearing element against the receiver.

5. The system of any of claims 1-3, further comprising:
a bearing coupled between the receiver and the concentrator to support rotation of the concentrator relative to the receiver, the bearing comprising:
a receiver interface member fixedly attached to the receiver and carrying a first bearing surface;
a receiver attachment member pivotably coupled to the receiver interface member; and
a concentrator attachment member having a second bearing surface engaged with the first bearing surface, the concentrator attachment member being pivotable relative to the receiver interface member.

6. The system of claim 5, wherein the receiver interface member includes a first element fixedly attached to the receiver and second element pivotably attached to the first element, and wherein the second element carries the first bearing surface; and/or
wherein the elongated conduit is elongated along a first axis and wherein the receiver attachment member is pivotable relative to the receiver interface member about a second axis and/or a third axis transverse to the first axis; and/or
wherein the receiver attachment member and the concentrator attachment member are pivotable about different axes relative to the receiver interface member, preferably
wherein the different axes are generally parallel.

7. The system of claim 5 or 6, wherein the elongated conduit is elongated along a first axis and wherein the first and second bearing surfaces are curved about a fourth axis parallel to the first axis; and/or
wherein the first bearing surface is less than 360 degrees; and/or
wherein the concentrator attachment member and the receiver attachment member are independently pivotable relative to the receiver.

8. The system of claim 4, 5 or any claim dependent thereon, wherein the receiver attachment member includes first and second projections, and wherein the biasing element has an open C-shape with a first end, a second end, and a central portion between the first and second ends, and wherein the first end is biased into contact with the first projection, the second end is biased into contact with the second projection, and the central portion is biased into contact with the receiver; and/or
wherein the projections are pins that extend from the first portion of the receiver attachment member; and/or
wherein the inner bearing element includes first and second separate, circumferentially-extending sections; and/or
wherein the inner bearing element includes a single, circumferentially-extending section having a first end and a second end spaced apart from the first end by a slit.

9. The system of any preceding claim, further comprising a drive mechanism coupled to the concentrator to rotate the concentrator relative to the receiver.

10. The system of claim 9, wherein the concentrator further includes:
a plurality of ribs transverse to the focal line; and
at least one compression member elongated along a compression axis generally aligned with the focal line, the compression member having a plurality of attachment locations, and wherein the system further comprises:
a drive line connected to the drive mechanism; and
a plurality of connecting lines coupled between the drive line and the corresponding plurality of attachment locations, wherein corresponding angles between individual connecting lines and the compression member are sized to cancel reaction forces not aligned with the compression axis when a load is applied to the drive line.

11. The system of claim 9, wherein the drive mechanism includes a winch and/or a rotary drum.

12. The system of claim 9 or 10, wherein the at least one compression member is a first compression member, the compression axis is a first compression axis, the plurality of attachment locations is a first plurality of attachment locations, the plurality of connecting lines is a first plurality of connecting lines, and wherein the elongated concentrator includes a second compression member elongated along a second compression axis generally aligned with the focal line and having a second plurality of attachment locations, and the system further comprises:
a second plurality of connecting lines coupled between the drive line and the corresponding second plurality of attachment locations, wherein corresponding angles between individual connecting lines of the second plurality of connecting lines and the second compression member are sized to cancel reaction forces not aligned with the second compression axis when a load is applied to the drive line.

13. The system of claim 9, 10 or 11 wherein the compression member is positioned at an edge of the elongated concentrator.

14. The system of any preceding claim, wherein the receiver includes:
a curved reflective element oriented concave relative to a focal line;
a curved first rib member carrying the reflective element and oriented concave relative to the focal line;
a curved second rib member oriented convex relative to the focal line; and
a plurality of cross members coupled between the first rib member and the second rib member.
